(19) Europäisches Patentamt
European Patent Office
Office européen des brevets

(11) **EP 3 282 281 A1**

(12) **EUROPEAN PATENT APPLICATION**

(43) Date of publication:
**14.02.2018 Bulletin 2018/07**

(51) Int Cl.:
*G01S 13/52* (2006.01)   *G01S 13/86* (2006.01)
*G08G 99/00* (2006.01)   *G01S 13/02* (2006.01)

(21) Application number: **17185492.0**

(22) Date of filing: **09.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.08.2016   US 201662372389 P**

(71) Applicant: **Global Ski-Pic Ltd.**
**4672220 Herzilya (IL)**

(72) Inventors:
• **Brosh, Assaf**
  **6813904 Tel Aviv (IL)**
• **Tenne, Gil**
  **6080840 Shoham (IL)**

(74) Representative: **Becker Kurig Straus**
**Patentanwälte**
**Bavariastrasse 7**
**80336 München (DE)**

(54)   **IDENTIFICATION OF RANDOM SKIERS WHILE SKIING**

(57)   A method is provided for identification of large numbers of skiers in ski slopes, in order to provide them automatically with pictures and videos of themselves during skiing. The method uses pattern matching of their tracked movement derived from a phase array ultra-low C-SWAP (cost, size, weight, and power) radar system and also from self-tracking of the skiers by their own mobile phones GPS. The GPS may be combined with a phase array Doppler radar in K band.

FIG. 1

EP 3 282 281 A1

**Description**

FIELD OF THE INVENTION

The present invention relates generally to a process and implementation of identification of large numbers of skiers in ski slopes, in order to provide them automatically with pictures and videos of themselves during skiing. In one example, the invention is related to identification of random skiers based on pattern matching of phase array radar targeting and mobile tracking for the purpose of delivery of automatic self-pictures and videos of the skiers while skiing.

BACKGROUND OF THE INVENTION

Ski resorts include many square kilometers of ski slopes using multiple chair lifts to carry skiers to high positions so they can ski downward in various slopes, and not necessarily restricted to narrow paths. If automatic cameras are positioned at selected locations, it is possible and probable that as many as tens of thousands of skiers can pass within photography areas, creating a major problem of identifying individual skiers and matching pictures taken automatically to multiple skiers, in order to deliver each picture to its owner. A typical skier is wearing a ski suit which is a fashion statement in many cases, plus helmet and visor sunglasses without any external identification of any kind. Skiers are seeking self-pictures while skiing like any other sports person, however, taking a picture on the slopes is difficult, involving capturing close-up high-speed movement in places where it is difficult to be a by-stander. In addition, skiers are shielded by protective gear, especially gloves, and their hands may be engaged with ski poles. All these factors compromise the ability to capture skiing activity in pictures.

The existing solutions for self-photography include the following technical methods:

1. Clear identification of each person by attaching a unique number to the person's apparel: This is used in public marathons and organized sport events and it is quite similar to police identification of cars using Optical Character Recognition (OCR) of car license plates. Such applications exist where a standard traffic radar triggers an automatic camera based on a possibility of speed violation, red light violation, or stop sign violation. In such cases the radar determines the possibility of the violation and triggers the automatic camera to take picture of the car. There is a pre-requisite of registration of the participant with a management system which issues him a unique number. For example, the car license plate is such a registration. Using OCR to separate the pictures taken by any type of automatic cameras according to their owners occurs after the pictures are already part of a central system. After this "identification", it is possible to send the pictures to the owners based on the existing information selected at the registration phase. Similar methods use barcode identification labels, which is even better for machine identification but useless in ski resorts. Such methods are not relevant in skiing due to the "non-organized" nature of the sport and the absence of such "identification".

2. Another, less accurate, method is face recognition technology for the identification of people out of an un-identified crowd. This method utilizes a face recognition algorithm and attempts to match the face against a central database of such faces which to some extend can be portraits used in application such as Facebook. However, these methods depend on the participant's cooperation by providing a clear portrait picture; they require clear view of the eyes, nose and sides of the mouth, which are often covered by face masks, reflective visors, etc. This method is not relevant to ski resorts since most skiers ski with helmets and face masks and reflective sun glasses of the type that prevent face recognition completely.

3. Amusement parks, bicycle downhill and other sports which are categorized by using narrow paths enable an identification of each sports person by a RFID tag. These tags transmit a fixed unique number when they are very close to the listening antenna. Relevant distances are limited by the frequency in use. For short distances these RFID tags are quite inexpensive. However, their use in ski resorts is limited to enable access to chairlifts from very short distances since the cost goes up substantially with the increase in distance. In open ski slopes this method is useless.

Generally speaking, RFID tag maximum read distances are as follows:

- 125 kHz and 134.3 kHz. Low Frequency Passive RFID Tags -read distance of 30 cm or less - usually 10 cm unless there is a very large tag which can have a read distance of up to 2 meters when attached to metal. These tags are very inexpensive and their cost meets a one-time usage application.
- 13.56 MHz. High Frequency (HF) Passive RFID Tags - maximum read distance of 1.5 meters - usually under 1 meter. These tags are still inexpensive but become more costly when used in large quantities.
- 860 ~ 960 MHz. Ultra-High Frequency (UHF) Passive RFID Tags - minimum read distance of over 1 meter. Tags can have a read range of up to 15 meters. These tags enable identification since only one person can be in the relevant distance at the same time.

- Other RFID tags using 860 MHz and above Active RFID Tags, enables larger distance of detection at a relatively high cost but in addition enables a situation where multiple tags holders are within distance of the reader at the same time and thus are useless for 1:1 identification of skiers.

4. Active RF tags with/without GPS component can be used for efficient tracking of various objects. This method is widely use in tracking vehicles and other high value objects. The RF tags transmit their location via direct RF, cellular or satellite communication to a base unit which translates those transmissions to position on a map. However, this technology limits includes high cost, low accuracy and infrequent transmission to save battery and relatively large size. It is not economical or practical to issue each skier with such device in addition to the problems derived from the inaccurate positioning due to infrequent transmission.

SUMMARY

In one embodiment of the present invention, the system uses automatic cameras triggered by radar to capture pictures and video motion of every skier within the photography area. In addition, the radar plots, records and transmits a temporal tracking of each skier within the radar cone shape detection area. The tracking information includes points in space and time {latitude, longitude, altitude, time}. The time element may be derived from GPS for synchronization with any other GPS in the area; all of them use the same satellite base time. The information is transmitted for any radar identified target to a server collection all such information from various photography automated stations. To achieve this with ultra-low C-SWAP (cost, size, weight, and power) radar system, the invention may use a radar system described below.

The system is applicable for mountain bikers and the term "ski" or "skier" encompasses mountain biking and biker.

Another embodiment of the present invention includes collection and transmission, for any participating skier, of a complete temporal tracking of the skier within a geographically drawn polygon generally corresponding to the radar cone shape detection area. The tracking information includes points in space and time {latitude, longitude, altitude, time}. The time element may be derived from mobile phone GPS. The resulted accumulated information includes sets of temporal points derived from GPS and motion process data plus additional position info from BLE Beacons and radar (with a built-in accuracy measured in meters and which varies with the number of satellites available at any specific time). For many practical reasons, it is unlikely that the data will match "as is". In reality, the set of points from each source for any target plots a track which can be described as a list of multiple-dimension vectors (e.g., four dimensions) at different frequencies. The comparison of many such vectors represents a N*M complexity problem. In order to reduce the problem to a lower complexity, a fuzzy logic method may be applied with the intention not to achieve a perfect match between a radar tracking pattern and a mobile tracking pattern which is unlikely, but to achieve a **"reasonable match"** for any one pattern from the mobile tracking sets to a one or more patterns from the radar targets tracking sets. Since errors and inaccuracies are possible and probable with any one of the parameters in each set, the matching algorithm may try to match the patterns of the sets and not the actual information. (Example of inaccuracies: the geographical coordinates within the mobile tracking have an accuracy between 3 meter to 10 meters radius in average depending on the number of available satellites; the time accuracy is rounded to the nearest second; motion process data information is fairly inaccurate in many mobile phone and distances and positions derived from Beacons triangulation are estimates , and the radar geographical coordinates accuracy is within few meters with the time rounded to 0.2 seconds.)

One of the drawbacks of using quality RFID (mentioned in the background) is its high cost. However, most people carry mobile phones. Advanced mobile phones have the capability to utilize Bluetooth Low Energy (BLE) to send short transmissions using very low energy using the Bluetooth frequencies. The transmission range is between millimeters to up to 100 m. However, many skiers with mobile phones can be in the same area at the same time, so this technology cannot serve as a direct identifier. However, since it is range sensitive, one can use the mobile phone BLE technology as a proximity trigger to announce the fact that a specific user is within range of a specific BLE beacon range. The camera station uses two transmitters, one of which is long range, such as for broadcasting the camera station identification, such as to 200 + meters. The mobile application of the invention which receives this transmission will start broadcasting its beacon message until the long range beacon is no longer received. The transmission can be detected by a long range receiver that will report to the station about the arrival of mobile user. In this manner, the station will go from a "stand by" state to an "active" state. In stand-by mode, the radar is working but does not record the skiers track and does not trigger the camera to take pictures of skiers that are not customers.

When a customer arrives and comes within its own transmitter range to the station, the station becomes active and utilizes the radar as described.

When the radar detects a skier and is in active state and receives the mobile transmission, the mobile beacon ID is added to the radar target information. Every time the radar detects a skier while active, a second medium range beacon transmitter starts broadcasting the station UTC time in seconds to the mobile within range.

If only one customer is within range, it will have cross reference information to make the matching more accurate and robust. If multiple customers are within range, the cross reference information will support the matching while the time synchronization will enable better matching even with low quality GPS components within some low cost mobile phone.

The practical considerations include the following tracking patterns of skiers, for the example best explain for two skiers skiing as follows:

**Skier A and Skier B ski "side by side" in the same general direction.**

| | |
|---|---|
| | Due to speed, close proximity is unlikely to be less than 5 meters in order to prevent collision and injury, since amateur skiers can ski at 30-60 km/hr. The data collected from both the mobile tracking and the radar tracking will show skiing within similar time ranges and similar geographical coordinates. Assuming the inaccuracies are evenly distributed, the mobile pattern of skier A will be "closer in space" to the radar pattern of skier A than that of skier B. The motion process data information of the mobile will show a specific vector which is similar to the line pattern of the radar. The beacon transmission will help synchronization of the time between the station and the mobile phone thus giving boundaries for the time range. |

**Skier A and Skier B ski "one after the other" in the same general direction.**

| | |
|---|---|
| | Due to speed, close proximity is unlikely to be less than 5 meters for slow skiers and 10 meters for high speed skiers. The data collected from both the mobile tracking and the radar tracking will show skiing within similar geographical coordinates and a small difference in the time range. Assuming the inaccuracies are evenly distributed, the mobile pattern of skier A will be "**closer in time**" to the radar pattern of skier A than that of skier B. The motion process data information of the mobile will show a set of specific vector changes which will define the pattern of the mobile phone. The beacon transmission will help synchronization of the time between the station and the mobile phone thus giving boundaries for the time range. |

**Skier A and Skier B ski in "crossing slalom pattern" in the same general direction.**

| | |
|---|---|
| | The data collected from both the mobile tracking and the radar tracking will show skiing within similar time ranges and different geographical coordinates. Assuming the inaccuracies are evenly distributed, the mobile pattern of skier A will be **"highly closer in space"** to the radar pattern of skier A than that of skier B. The motion process data information of the mobile will show a set of specific vector changes which will define the pattern of the mobile phone. The beacon transmission will help synchronization of the time between the station and the mobile phone thus giving boundaries for the time range. |

**Skier A and Skier B ski in "independent patterns" in the same time range**

| | The data collected from both the mobile tracking and the radar tracking will show skiing within similar time ranges and different geographical coordinates. Assuming the inaccuracies are evenly distributed, the mobile pattern of skier A will be **"highly closer in space"** to the radar pattern of skier A than that of skier B. The motion process data information of the mobile will show a set of specific vector changes which will define the pattern of the mobile phone. The beacon transmission will help synchronization of the time between the station and the mobile phone thus giving boundaries for the time range. |
|---|---|

The radar detection area is large enough to enable multiple skiers to ski at the same time. Even assuming a courtesy providing empty space around each skier for the sake of photography, still it is possible to encounter multiple targets; thus, the complexity is quite high. The mathematical algorithm utilized for the analysis of the data is described below.

## BRIEF DESCRIPTION OF THE DRAWINGS

The present invention will be understood and appreciated more fully from the following detailed description, taken in conjunction with the drawing in which:

Fig. 1 is a simplified illustration of a method and system for identification of skiers, in accordance with a non-limiting embodiment of the present invention.
Fig. 2 is a simplified illustration of an exemplary Doppler radar system of the prior art with eight antennas.
Fig. 3 is a simplified illustration of an ultra-low C-SWAP (cost, size, weight, and power) Doppler radar of the prior art.
Fig. 4 is a simplified illustration of a radar system in accordance with a non-limiting embodiment of the present invention.

## DETAILED DESCRIPTION

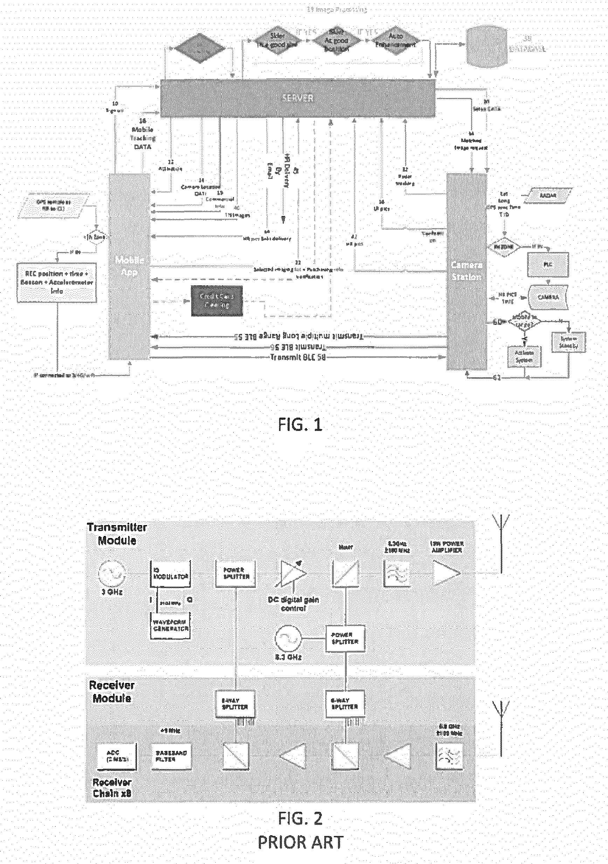

The following table summarizes elements shown in Fig. 1:

| Element | Description |
|---|---|
| 10 | Sign Up process in which the skier identifies his/her phone using phone number plus optional email after installing the process mobile application. Alternative method is to log in using a social media account. In this method we received the social media account code that we can use for the upload of images to the skier's social media account. |
| 12 | Activation process - due to the critical importance of the phone number as a prime identifier of the skier the invention may employ an activation process. The skier receives an activation code by SMS and needs to insert it as a verification of the correctness of the phone number. Login using a social media account includes its own built-in verification method. |
| 14 | Cameras locations are retrieve by the mobile app to enable efficient tracking of the skier without using too much battery power. |

(continued)

| Element | Description |
|---|---|
| 16 | Mobile tracking data. Sets of temporal points {time, latitude, longitude, altitude, plus additional vector information from the motion process data (e.g., time, direction, change value, etc.) and sets of triangular information related to the receiving of the station beacons transmissions (e.g., time, beacon ID, distance from stationary beacon) of the skier when he/she skies within the cameras photography areas. This information is a significant part of the matching information. |
| 18 | Matching process in which every mobile tracking pattern is matched when possible to all potential sets of radar tracking patterns. A preprocess to the actual matching normalizes the mobile data, especially the timing using the beacon information. The motion process data vector information enables the process to build a graph model of time, angle and intensity. It will serve as backup information to the matching decision making in relation to the radar time, angle and distance information. |
| 20 | Thumbnail images which had been found to be connected to the radar tracking information matched to the mobile tracking information are sent to the mobile app for review by the skier. The skier can select images (if at all) to purchase. This process is repeated every time a new set of matching patterns has been found. |
| | The thumbnail images are generated in the photo station from the original high resolution images and may be considered as preview images with low resolution and overlay watermark and/or graphics to enable self-recognition of the skier and landscape. |
| | The thumbnail images are send from the photo station to the server and are stored in a database waiting to be retrieved by the relevant mobile app. |
| 22 | The list of images selected from the thumbnails list by the skier for purchasing plus the purchasing confirmation data. The skier will select all the pictures he/she liked out of the full set of thumbnails available. |
| 24 | This is the delivery phase of the process in which the images selected as "thumbnails" and purchased are sent as high resolution images to the mobile application in a secure and controlled method. An alternative delivery method based on the skier preferences is to get the high resolution images as email attachments. Since those images are saved in the database, it is possible for the skier to download them again if required. |
| 30 | Each camera station retrieves its own setup information from the server any time when the data in the server is more updated than the one in the camera station computer. |
| 32 | Radar tracking represents all sets of temporal points {time, latitude, longitude, altitude, angle, distance} of any skier that the radar identified as "target" when the skier position is within the cameras photography areas. |
| 34 | High resolution images of any pattern match between the mobile tracking patterns and the radar tracking patterns. Since any radar target is associated with one of more images (picture or video motion) when this target is linked or matched to specific skiers, the high resolution images are retrieved from the camera station by communication with the server after the associated thumbnails thereof have been selected in the mobile app preview. The logic assumes that since the bottleneck is the communication bandwidth between the photo station and the server (upload process via cellular router), one would like to transfer only the selected high resolution images from the client station to the server. |
| 36 | Image processing covers all the operations performed on the high resolution images after arriving in the server, including but not limited to: |
| | Automatic white balance, Automatic image equalizer, contrast, sharpness, brightness, gamma correction, automatic disposal of background only images and images with low quality and too small skier in relation to the background images. All of the above may be done on the thumbnail images This analysis information will enable removal of low quality images from those sent to the skier for review and to enhance the high resolution images after selection before delivery to the skier. |
| 38 | Database storage of all skier data with images and related information. |

(continued)

| Element | Description |
|---|---|
| 55 | On every camera station, the system will include a Bluetooth Low Energy (BLE) transceiver. This device will continuously broadcast its identifier using a directional antenna uphill, the direction from which the skiers or mountain bikers arrive. This broadcast "Tells" the mobile application that camera station is in short distance in addition to its GPS unit. The advantage is that the message is a backup for the GPS which might be in temporary error. The receiving of this message directs the mobile to increase GPS sampling frequency. |
| 56 | Another BLE transmitter transmits the computer time as part of its message broadcast all the time but with shorter distance so it will cover the photo area and not much more. If the time resolution is one second it will change every 1 second. |
| 58 | The mobile BLE transmitter will broadcast its own Skier_id, Biker_id. It will alert the camera station that a skier who is also a customer is arriving. The camera station is in Standby mode all the time until it receives this message and then it changes to Active mode and starts working as usual. The purpose of this method is to reduce the usage of limited resources such as camera shutter clicks and cellular communication bandwidth. When the message is no longer received, the station changes back to Standby. |

For each ski resort and camera station, initial setup is used to specify for each camera its photography polygon area. For each radar, its true heading and GPS location and detection area overlap all cameras[1] photography polygon areas. Since cameras and radar are stationary, this information is fairly stable. However, since changes can happen, all the information covering the cameras and associated radar system is stored in the server and is available to all camera stations computers and any skier mobile app upon startup.

Each camera station consists of multiple cameras, each pointing to a specific reverse trapeze shape area (e.g., photography polygon area) in which a skier, if entered, will be tracked by the radar as an active target and photography will be triggered. When the skier is outside of the photography polygon area the camera will no long be taking pictures unless a different target has triggered photography on the same camera. If a specific radar target tracking pattern cross within a photography polygon area the temporal information (e.g. a list of points each with latitude, longitude, altitude, time, angle, distance) will be sent to the server as "radar tracking patterns". This is possible since the radar has been modified to enable accurate data within medium range (e.g. under 120 meters). All the pictures taken due to this specific triggering are stored in the camera station and linked to the radar unique target ID for future retrieval if and when this radar target pattern will be found "matched" to a specific /(s) mobile tracking pattern(s). The station includes several BLE beacon transceivers. One is a long range beacon that announces the camera location to skiers with the mobile application active. When the distance is within range, the mobile app transmitter starts broadcasting its own information to the photo station which stores its details and exact time with the radar tracking. When the station receives the beacon message it can change its status from "stand by" to "active" thus operating the camera only when customers are skiing into the photo area. This method saves the station a lot of photography of skiers which are not the customers of the system and cannot get a picture from the system. When the mobile app beacon is out of range or the GPS location is out of the photography polygon area, the station moves back to "stand by" status unless a new skiers powers it up.

In parallel, the same skier that skies within the camera station photography polygon area may have downloaded a mobile app which tracks its position and/or its movement vectors via motion processor and uses the BLE range from the transmitting beacon. Since beacon frequency is between, for example, 20 Hz and 100Hz (and can increase in future mobile models) it provide a fill up of triangulation details between the 1 per second GPS sampling. Thus the result is a more accurate pattern. In addition, the motion processor information can add its own vectoring information to the tracking points while within the same camera station photography polygon area. This information is sent to the server and titled mobile tracking data. Due to different frequencies of sampling between the radar and the mobile app and taking into account the built-in error with GPS time and location reading and beacon distance measurement and motion process data reading, a special method is needed in order to find reasonable match for every mobile tracking set from the large number of radar tracking patterns available even with the same time frame. Comparing 4D patterns generally involves a mathematical approximation of the integral of the area between the two or more patterns. However, such methods which are fine for standard pattern matching are not applicable in this case since even patterns like "one after the other" will not be found matching due to changes in the time frame. The best method for such 4D and up patterns matching is similar to methods utilized for the discovery of "trends" within big data analysis.

When all the radar tracking patterns which are under the threshold for a specific mobile tracking pattern have been found, the server application retrieves from the relevant camera computer all the thumbnail images (pictures and video motion) associated with those radar tracking patterns. Those images are processed in order to achieve the following, without limitation:

Remove images without a skier (background only) or those with the skier too small or too far in the edges of the image. Those images are identified as images by using motion detection method coupled with background removal in dynamic situations due to changes in the lighting conditions in relevance to background only image or where motion contour areas are smaller than the defined threshold. This process is done using Deep Learning methods.

White balance / black balance / color balancing - those methods verified that the image "white" will be "white" etc.

Color correction using operators such as brightness, contrast, sharpness, gamma correction etc. using time of the day / sun position in the sky and values for the automatic exposure to make the skiers flesh tone and apparel look better.

The final phase involved creating small thumbnails from all images. Those after water marking and stamping will serve as a teaser to enable the skier to preview them before selection and purchasing of the high resolution images.

Any purchased image will be delivered to the skier via the mobile application or email according to the skier preferences.

## ULTRA-LOW C-SWAP (COST, SIZE, WEIGHT, AND POWER) RADAR SYSTEM

As mentioned above, in accordance with an embodiment of the invention, a K band phase array radar design is presented. Features of the radar include, without limitation, its ability to detect moving targets in terms of distance and angle from the radar antenna and some aspects of the targets relative linear and angular velocity. However, if a target is moving in non-direct curves the separation of the linear velocity from the angular velocity represents a challenge. One way of measuring speed is possible using the Doppler Effect.

However, the Doppler Effect is only able to determine the relative speed of the target along the line of sight from the radar to the target. Any component of target velocity perpendicular to the line of sight cannot be determined by using the Doppler Effect alone, but it can be determined indirectly by tracking the target's azimuth over time which is highly expensive.

It is possible to make a Doppler radar without any pulsing, known as continuous wave radar (CW radar). CW radar is ideal for determining the radial component of a target's velocity. CW radar is typically used by traffic enforcement to measure vehicle speed quickly and accurately where range is not important.

When using pulsed radar, the variation between the phases of successive returns gives the distance the target has moved between pulses, and thus its speed can be calculated. Other mathematical developments in radar signal processing include time-frequency analysis (Weyl Heisenberg or wavelet), as well as the chirplet transform which makes use of the change of frequency of returns from moving targets ("chirp").

In military or high cost systems, the problem is resolved using some of the methods specified above and/or expensive signal processing systems or the use of multiple antennas arranged in different angles thus receiving from the n antennas multiple polynomial results each combining the linear velocity and angular velocity relatively to the angles of the antennas. Using n polynomial equations it is possible for the Doppler filter using Kalman linear quadratic estimation to separate the signal from the noise and the linear from the angular wave shifts. However, those methods are quite expensive in terms of C-SWAP (cost, size, weight, and power) and thus reserved for military, aviation or large-scale systems. Some other types of radars such as those used for astronomy do not care about the issue since when detecting at very long range the component of angular velocity shift is insignificant.

Fig. 2 shows an exemplary model of the prior art for eight antennas.

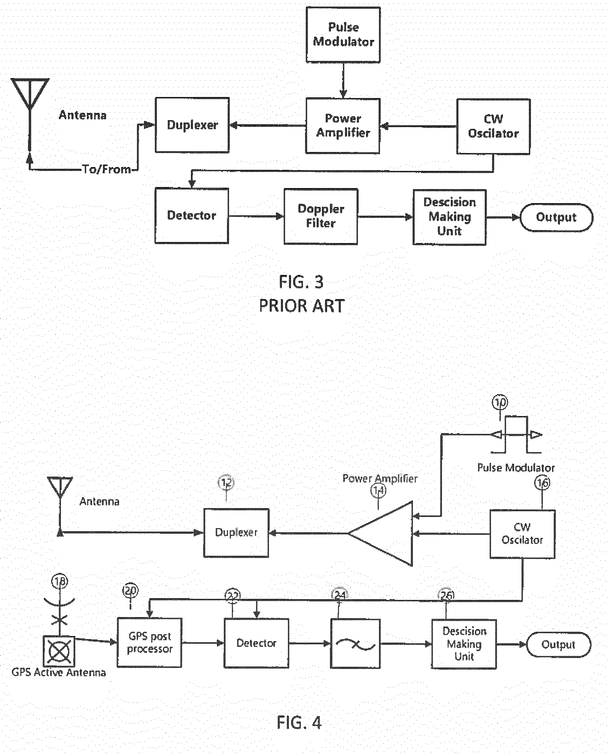

Specifically, many civilian models are examples of an ultra-low C-SWAP (cost. size, weight, and power). Such models are used for traffic control and other applications and they utilized a much simplied model such as the example shown in Fig. 3 of the prior art.

Assuming the target is not moving in linear line such as in ski slalom than the relative motion between the target and the radar is according to the following formula:

$$d\Phi/dt = -2\,\pi\,2\,dR\,/\,\lambda\,dt$$

Where range **R** and phase $\Phi$ change with time **t.**

Since frequency is the time derivative of phase, the received frequency differs from the transmitted frequency by the Doppler frequency shift delta **f.**

$$\text{Delta } f = d\Phi\,/\,d\,t\,*2\,\pi = 2\,d\,R\,/\,\lambda\,dt$$

**division by 2 $\pi$ to convert angular frequency to linear frequency**

**or delta f = - 2 V$_r$ / $\lambda$ Where V$_r$ is the radial velocity (m/s).**

It is quite clear that if the linear velocity is not high and the radial velocity is similar in scale the accumulated error in the Doppler shift will be substantial.

In contrast with the prior art, in one embodiment of the present invention, a K band phase array radar system provides an integration between the radar signal processing cycles and GPS timing synchronized by the radar clock. The result is temporal radar which can provide for each signal cycle an accurate timing for the target detection based on the GPS time limited only by the GPS frequency. In addition, the geographical coordinates (latitude, longitude, altitude) provided by the GPS enable the tracking of targets in 4 dimensions (x, y, z, t). This type of radar utilizes the linear Doppler effect to calculate the speed of the target; it has a built-in error since the target is not always moving to or from the antenna in linear lines. The angular or rotational Doppler shift created by the angular movement of the target is translated into an increase or decrease of its linear velocity, which creates a built-in error. However, if one calculates the average velocity based on the equation of motion and between relatively close measurements, one can use the following formula independently from the Doppler calculated speed.

$$\text{Average velocity} = \sqrt{((x_2-x_1)^2 + (y_2-y_1)^2 + (z_2-z_1)^2)} \,/\, (t_2-t_1)$$

GPS hardware integration uses a GPS receiver chip capable of receiving all major GPS networks plus external active antenna. The software integration inserts the GPS polling into the radar signal processing cycle. The accuracy of the calculation of the average target velocity depends on the built-in accuracy of the GPS information available for low cost civilian GPS.

Modern radar systems do not show the actual radar scanning on analog CRT's but actually deliver the radar information into a processing unit responsible for the decision making according to the software algorithms. Due to human limitations, visual updates which occur more than few times per second are meaningless. In one embodiment of the invention, the phase array radar is integrated with GPS for automated tracking of extreme sport participants such as skiers, cyclers etc. For example, 5-100 times per second all the information derived from both the radar and the GPS regarding the valid targets is transmitted to the client computer Higher frequency is possible but increases substantially the load on the receiving computer for no visible additional information in relation with skiers and bikers speed. There is little value to record the person position every few centimeters when the GPS accuracy is 3-10 meters in average.

Fig. 4 illustrates an embodiment of the radar system of the invention, which is an ultra-low C-SWAP (cost, size, weight, and power) radar system with some capabilities normally available only in much larger radar systems. This embodiment of the invention incorporates a GPS system with a phase array Doppler radar in K band. In the prior art, such integration demands a much higher C-SWAP capacity. In contrast, the embodiment of the invention uses narrow targeting of high moving skiers down slopes while ignoring anything else, which advantageously enables utilizing the available low emitting power and processing power units for high accuracy detection of the relevant targets.

A list of the elements in the system is as fallows:

Element 10 - Pulse modulator in the K band frequency.
Element 12 - Duplexer connected to the emitting/receiving antenna
Element 14 - Power amplifier.
Element 16 - CW Oscillator
Element 18 - GPS active antenna connected to the GPS post processor. Using this setting, it is possible to utilize all the available GPS satellites from all networks.
Element 20 - GPS post processor that uses multiple satellites to increase the accuracy of the GPS readings.
Element 22 - Detection units that separates the relevant signal from the noise and clutter.
Element 24 - A Doppler filter that filters the signals based on the Doppler effect which basically filters out elements that have no vector movement in relation to the stationary receiving radar antenna.
Element 26 - A processor that serves as a decision-making unit for the radar and enables the radar system to display targets that meet a specific criterion. In this embodiment of the invention, the main advantage is the ability to ignore targets that are getting away from the radar, or to ignore targets that have too small radar signature or too large radar signature.

This is a change in the prior art design common in phase array Doppler radars mostly used in traffic control. Instead, this embodiment of the invention enables high accuracy detection of skiers skiing down slopes or similar situations where people are moving closer to the radar in difficult outdoor situations such as skiing, downhill cycling etc.

One problem of the prior art which is overcome by the invention is the inability of ultra-low C-SWAP (cost, size, weight, and power) radar systems to deliver accurate tracking results due to the inability of those systems to differentiate and compensate for the radial velocity of the target from the linear velocity. Thus applications which require this accuracy need to use a much more powerful and expensive radar systems, mainly using brute force approach in the form of multiple antennas in order to try to separate the angular velocity from the results of the Doppler effect. In addition, ultra-low C-SWAP radar systems do not have sufficient processing power to handle all the signals that are returning from various targets in the relevant range. This embodiment of the invention may employ three specific hardware and software modules:

Element 20 may be a GPS receiver and processor. It is an addition not found it ultra-low C-SWAP radar systems since it adds a high overhead to the required processing power.

Element 24 may be a Doppler filter modified in such a way to dramatically reduce the number of signals which require processing. If a standard, ultra-low C-SWAP radar systems detects any target with large enough return emission within range the modified filter utilized specific hardware and software to eliminate all signals going away from the radar thus reducing the load by 50%. Since the main application for this radar is the detection and tracking of skiers. additional fine tuning of the range of acceptable radar signatures enables the filter to ignore and not spend any processing power on detection and tracking of high signature targets (e.g. cars in traffic applications or cable cars moving within range) and low signature targets such as snow. tree movement. flags moving and other smaller than skier targets.

Element 26 may be the decision-making unit (hardware processor and software) modified to incorporate the signals from element 20 (GPS receiver and post-processor) into the regular radar signals after filtration by element 24 (Doppler filter), utilizing the fact that it has a substantially lower load from radar signals to handle the additional signals from the GPS and thus fix the angular velocity /linear velocity problem for the specific applications.

## Claims

1. A method comprising:

   using a plurality of cameras triggered by radar to capture pictures and video motion of every skier of a plurality of skiers skiing on a ski course; and
   recording tracking information of each skier within a radar detection area, said tracking information comprising points in space and time, wherein the time is derived from a GPS (global positioning system) device synchronized with another GPS device in the ski area, and wherein one of the GPS devices is a GPS device from a mobile phone of the skier being tracked.

2. The method according to claim 1, comprising using a fuzzy logic method so as not to achieve a perfect match between a radar tracking pattern and a mobile tracking pattern, but to achieve a "reasonable match" for any one pattern from the mobile tracking sets to a one or more patterns from the radar targets tracking sets.

3. The method according to claim 1, wherein the radar detection is done with a phase array Doppler radar in K band.

4. The method according to claim 3, comprising using a Doppler filter with said phase array Doppler radar to reduce an amount of signals which require processing.

EP 3 282 281 A1

FIG. 1

FIG. 2
PRIOR ART

Pulse
Modulator

Antenna

Duplexer ← Power
Amplifier ← CW
Oscilator

To/From

Detector → Doppler
Filter → Descision
Making
Unit → Output

FIG. 3
PRIOR ART

(10)

Pulse Modulator

Antenna (12) Power Amplifier
(14) (16)

Duplexer ← CW
Oscilator

(18)

GPS Active Antenna

(20) (22) (24) (26)

GPS post
processor → Detector → ∿ → Descision
Making
Unit → Output

FIG. 4

Europäisches
Patentamt

European
Patent Office

Office européen
des brevets

# EUROPEAN SEARCH REPORT

Application Number

EP 17 18 5492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/152808 A1 (GREAT INNOVATIONS STOCKHOLM AB [SE]) 8 October 2015 (2015-10-08) * figures 1,4 * * page 5, lines 1-16 * * page 6, line 13 - page 7, line 15 * ----- | 1-4 | INV. G01S13/52 G01S13/86 G08G99/00 G01S13/02 |
| A | WO 2015/144741 A1 (SONY CORP [JP]; SONY DEUTSCHLAND GMBH [DE]) 1 October 2015 (2015-10-01) * abstract; figure 13 * * paragraphs [0067] - [0073] * ----- | 1-4 | |
| A | US 6 198 431 B1 (GIBSON JAMES M [US]) 6 March 2001 (2001-03-06) * column 7, line 8 - column 9, line 44 * ----- | 1-4 | |
| A | GB 2 437 773 A (TAPTIKLIS NICHOLAS THEODORE [GB]) 7 November 2007 (2007-11-07) * figures 1,4 * * page 6, line 14 - page 8, line 2 * * page 9, line 1 - page 10, line 18 * ----- | 1-4 | TECHNICAL FIELDS SEARCHED (IPC) G01S |
| A | US 2013/321146 A1 (KWONG YAY WAI EDWIN [HK]) 5 December 2013 (2013-12-05) * figure 1 * * paragraphs [0007] - [0010] * ----- | 1-4 | |
| A | US 2016/189391 A1 (DEMARTIN FRANK [US] ET AL) 30 June 2016 (2016-06-30) * figures 2,3,13 * * paragraphs [0101] - [0109] * ----- | 1-4 | |

The present search report has been drawn up for all claims

| Place of search | Date of completion of the search | Examiner |
|---|---|---|
| Munich | 20 December 2017 | Unterberger, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 18 5492

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2017

| Patent document cited in search report | | Publication date | Patent family member(s) | | Publication date |
|---|---|---|---|---|---|
| WO 2015152808 | A1 | 08-10-2015 | CN<br>EP<br>SE<br>US<br>WO | 106164769 A<br>3126907 A1<br>1450392 A1<br>2017115373 A1<br>2015152808 A1 | 23-11-2016<br>08-02-2017<br>02-10-2015<br>27-04-2017<br>08-10-2015 |
| WO 2015144741 | A1 | 01-10-2015 | US<br>WO | 2017085771 A1<br>2015144741 A1 | 23-03-2017<br>01-10-2015 |
| US 6198431 | B1 | 06-03-2001 | NONE | | |
| GB 2437773 | A | 07-11-2007 | NONE | | |
| US 2013321146 | A1 | 05-12-2013 | NONE | | |
| US 2016189391 | A1 | 30-06-2016 | US<br>US | 2016189391 A1<br>2017132795 A1 | 30-06-2016<br>11-05-2017 |

EPO FORM P0459

For more details about this annex : see Official Journal of the European Patent Office, No. 12/82